# EUROPEAN PATENT APPLICATION

(11) **EP 4 738 129 A1**
(43) Date of publication of application: **06.05.2026**
(21) Application number: 25212670.1
(22) Date of filing: 31.10.2025
(51) Int. Cl.: G06F 12/04

(54) **COMPRESSED MEMORY SYSTEM AND METHOD OF MANAGING COMPRESSED DATA**

(30) Priority: 04.11.2024 KR 20240154488
(71) Applicant: Samsung Electronics Co., Ltd., Suwon-si, Gyeonggi-do 16677 (KR)
(72) Inventor: Park, Jinsu, 16678 Suwon-si, Gyeonggi-do (KR); Kim, Yoojin, 16678 Suwon-si, Gyeonggi-do (KR); Nam, Jihoon, 16678 Suwon-si, Gyeonggi-do (KR); Park, Seongwook, 16678 Suwon-si, Gyeonggi-do (KR)
(74) Representative: Grünecker Patent- und Rechtsanwälte PartG mbB

(57) **Abstract**

Disclosed are a compressed memory system and a method of managing compressed data. The method including storing, in a first area of a memory, first data of a first slot corresponding to a front part among compressed data from original data, storing, in a second area of the memory, second data of a remaining slot, the remaining slot including data from the compressed data other than the first data, and storing metadata corresponding to the second data in a metadata table in a third area of the memory.

## Description

### BACKGROUND

### 1. Field

The following description relates to a compressed memory system and a method of managing compressed data.

### 2. Description of Related Art

As applications requiring large memory, such as big data and/or machine learning, are widely used, the demand for a data center for a memory device has increased. To respond to the demand, devices for expanding a main memory are being actively studied, but typical expansions of memory capacity by adding the memory device may increase the total cost of ownership (TCO) due to the cost of purchasing devices and additional power consumption of devices.

### SUMMARY

The invention is claimed in the independent claims. Preferred embodiments are specified in the dependent claims.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a general aspect, here is provided a processor-implemented method including storing, in a first area of a memory, first data of a first slot corresponding to a front part among compressed data from original data, storing, in a second area of the memory, second data of a remaining slot, the remaining slot including data from the compressed data other than the first data, and storing metadata corresponding to the second data in a metadata table in a third area of the memory.

The storing the first data may include storing the first data in the first area of the memory in a same order as an order of blocks of the original data corresponding to the first data for each of the blocks of the original data.

The first data and the blocks of the original data may be one-to-one mapped in an order of addresses of the original data.

The storing the first data may include storing the first data in the first area of the memory in parallel.

The storing the data of the first slot may be performed by one of a channel wise or rank-wise manner.

The metadata table may include a compressed size of the compressed data and an entry of the metadata storing location information of the second data, and the entry of the metadata may be one-to-one mapped with blocks of the original data in an order of addresses of the original data.

The metadata may include a number of slots allocated to the second data and a physical address of the second data corresponding to each block of the original data.

A first size of the first area may be dynamically adjusted according to one or more of a compression rate of the memory and a size of the memory.

The storing the first data may include dividing blocks of the original data into a plurality of sub-blocks and storing, in the first area of the memory, first sub-block data of a first sub-block corresponding to a front part for each of the plurality of sub-blocks.

The storing of the metadata corresponding to the second data may include storing, in the metadata table, metadata corresponding to remaining sub-slot data of a remaining sub-slot other than the first sub-block data for each of the sub-blocks.

The metadata may include one or more of a number of slots allocated to each data piece of the remaining sub-slot, a physical address of the data of the remaining sub-slot corresponding to each of the blocks of the original data, and a compression size of the data of the remaining sub-slot.

In a general aspect, here is provided a processor-implemented method including receiving, from a host device, a read request for target data from among compressed data stored in a memory, computing device physical addresses of a first slot corresponding to the target data and an entry of a metadata table responsive to the read request, according to the device physical addresses, decompressing first data of the first slot by reading the data of the first slot and decompressing remaining data of a remaining slot other than the first slot by reading the entry of the metadata table, and transmitting block data obtained by combining the decompressed first data and the decompressed remaining data to the host device.

The read request may include an index of the target data.

The decompressing may include determining a first physical address of a first slot of a target block corresponding to the target data and a second physical address of a metadata table of the target block, by an index of the target data, decompressing compression of the data of the first slot by reading the data of the first slot based on the first physical address, reading an entry of the metadata table based on the second physical address in addition to reading the first data, and decompressing the remaining data by obtaining a physical address of respective data of the remaining slot from the entry of the metadata table.

The determining of the first physical address and the second physical address may include determining the first physical address by a first multiplying of the index of the target block by a slot size and adding a base address of a first area of the memory to a first result of the first multiplying and determining the second physical address by a second multiplying of the index of the target block by a size of the metadata and adding a base address of a third area of the memory to a second result of the second multiplying.

In a general aspect, here is provided a non-transitory computer-readable storage medium storing instructions that, when executed by a processor, cause the processor to perform the method.

In a general aspect, here is provided an electronic device including one or more processors configured to execute instructions and a memory storing the instructions, and an execution of the instructions configures the one or more processors to store, in a first area of a memory, first data of a first slot corresponding to a front part among compressed data from original data, store, in a second area of the memory, remaining data of a remaining slot other than the data of the first slot among the compressed data, and store metadata corresponding to the remaining data in a metadata table in a third area of the memory.

In a general aspect, here is provided a compressed memory system including a memory including one or more of a normal memory area and a compressed memory area, a memory controller configured to generate a control signal for decompressing target data in response to receiving, from a host device, a read request for the target data among compressed data stored in the memory, and a compressor configured to store compressed data of original data in the memory and decompress a compression of the target data in response to the control signal, the compressor including a compression and decompression device configured to decompress first data of a first slot by reading the first data of the first slot corresponding to the target data and decompress remaining data of a remaining slot by reading an entry of a metadata table and a memory device configured to combine the decompressed first data with the decompressed remaining data and transmit the combined data to the host device.

The memory device may be further configured to store, in a first area of the memory, compressed first data of the first slot corresponding to a front part for each of blocks of the original data in the compressed data, store, in a second area of the memory, remaining data of a remaining slot other than the data of the first slot among the compressed data, and store metadata corresponding to the remaining data in a metadata table in a third area of the memory.

The memory device may be further configured to determine a first physical address of a first slot of a target block corresponding to the target data and a second physical address of a metadata table of the target block, by an index of the target data, decompress a compression of first slot data by the compression and decompression device by reading the first slot data corresponding to the target data based on the first physical address, read an entry of a metadata table corresponding to the target data based on the second physical address in addition to reading the first slot data, and decompress a compression of the remaining slot data by the compression and decompression device by obtaining a physical address of the remaining slot data from the entry of the metadata table.

Other features and aspects will be apparent from the following detailed description, the drawings, and the attached claims.

### BRIEF DESCRIPTION OF THE DRAWINGS

FIG. 1 illustrates an example memory compression and memory compaction processes of a typical compressed memory system.
FIG. 2 illustrates an example method of managing blocks of compressed data in a compressed memory system according to one or more embodiments.
FIG. 3A illustrates an example method of managing a compressed memory by a memory device according to one or more embodiments.
FIG. 3B illustrates an example method of managing a compressed memory by a memory device according to one or more embodiments.
FIG. 4 illustrates an example configuration of metadata for each data block according to one or more embodiments.
FIG. 5 illustrates an example configuration of metadata according to one or more embodiments.
FIG. 6 illustrates an example method of a memory device according to one or more embodiments.
FIG. 7 illustrates an example method of a memory device according to one or more embodiments.
FIG. 8 illustrates an example method of decompressing compression according to one or more embodiments.
FIG. 9 illustrates an example method of processing a data read request in a compressed memory system according to one or more embodiments.
FIGS. 10A and 10B illustrate example illustrations of data access latency through priority read on a first slot according to one or more embodiments.
FIG. 11 illustrates an example electronic device according to one or more embodiments.
FIG. 12 illustrates an example compressed memory system according to one or more embodiments.
FIG. 13A illustrates an example compressed memory system with a plurality of compression and decompression devices according to one or more embodiments.
FIG. 13B illustrates an example data configuration of a first slot in a compressed memory system with a plurality of compression and decompression devices according to one or more embodiments.

Throughout the drawings and the detailed description, unless otherwise described or provided, the same drawing reference numerals may be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

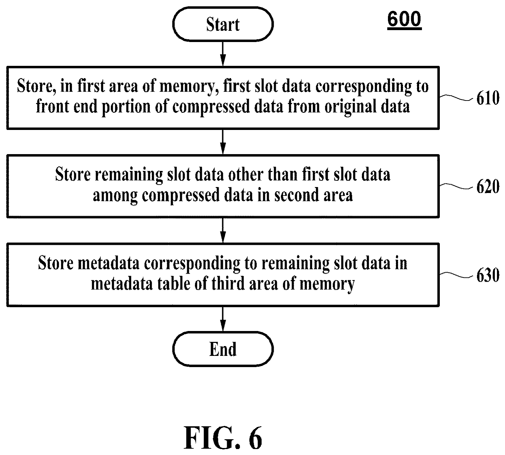

In an example, a compressed memory technique (e.g., method 600 of FIG. 6) may effectively reduce the TCO of data centers. The compressed memory technique may improve the valid capacity of the memory device by compressing data and storing the compressed data in the memory device

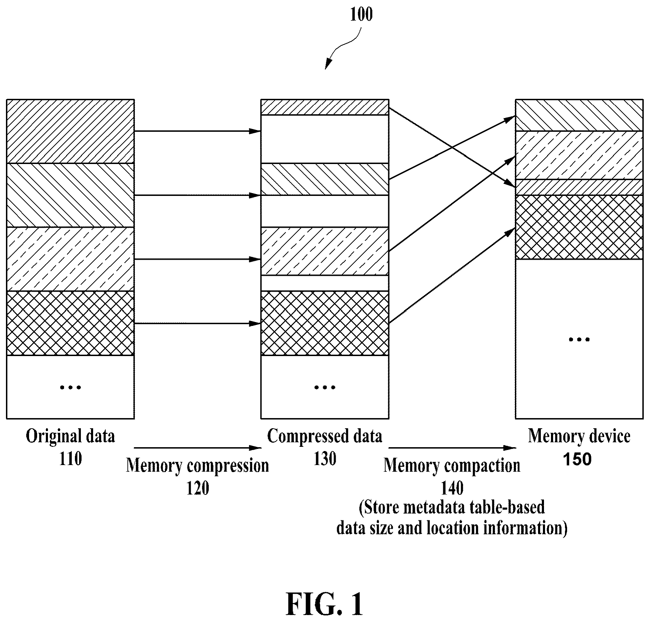

FIG. 1 illustrates an example memory compression and memory compaction processes of a typical compressed memory system. Referring to FIG. 1, in a non-limiting example, a diagram 100 illustrates a typical process in which after original data 110 is converted into compressed data 130 through a memory compression 120 process, the original data 110 is stored in a memory device 150 through a memory compaction 140 process.

On the other hand, in an example, as described in greater detail below, the compressed memory technique (e.g., method 600 of FIG. 6) may improve the valid capacity of the memory device 150 by converting the original data 110 into the compressed data 130 having a smaller volume by compressing in the memory compression 120 process and storing the compressed data 130 in the memory device 150. In comparison, when using the typical compressed memory technique, access latency may increase due to an analysis of metadata to manage the compressed data 130 and decompression to access the compressed data 130. The memory device 150 may also be referred to as a "compressed memory device" since the memory device 150 stores the compressed data 130.

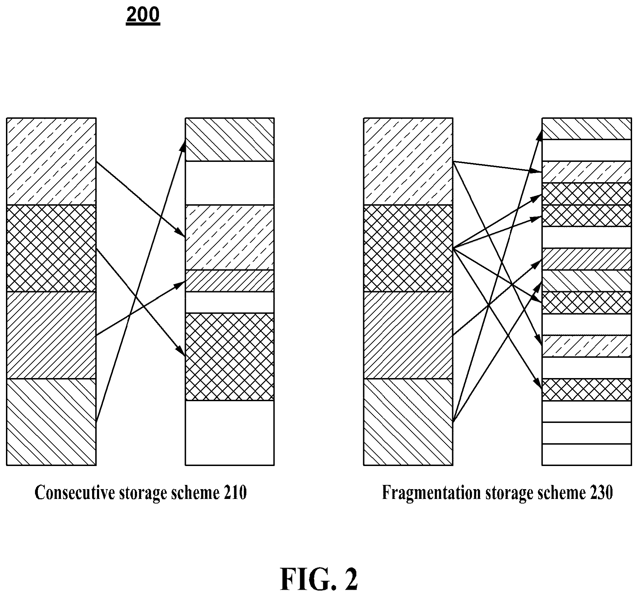

Examples of the compressed memory technique (e.g., method 600 of FIG. 6) may allow a service provider of a data center to process a greater memory demand without requiring an additional memory device (e.g., memory device 150) or a server. In an example, a compressed memory management scheme (e.g., method 200 of FIG. 2) may be used in addition to a compression algorithm to improve the performance and compression efficiency of the compressed memory. The compressed memory management scheme may allocate the compressed data 130 to a physical address space of the memory device 150 (e.g., consecutive storage scheme 210 of FIG. 2) and may migrate the compressed data 130 to minimize memory fragmentation (e.g., fragmentation storage scheme 230 of FIG. 2). Even if the performance and compression efficiency of the compression algorithm are decent, without combining with an appropriate compressed memory management scheme, access time to the compressed data 130 may increase or a valid compression rate may decrease.

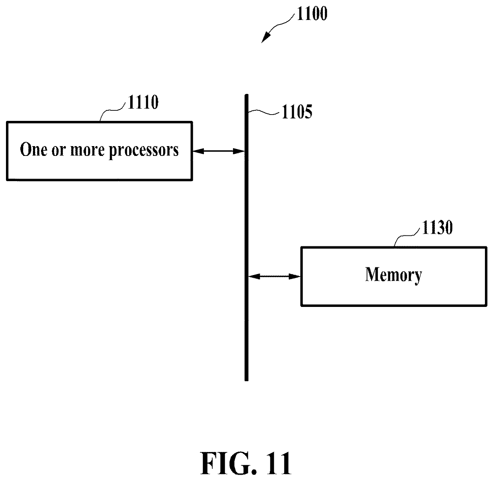

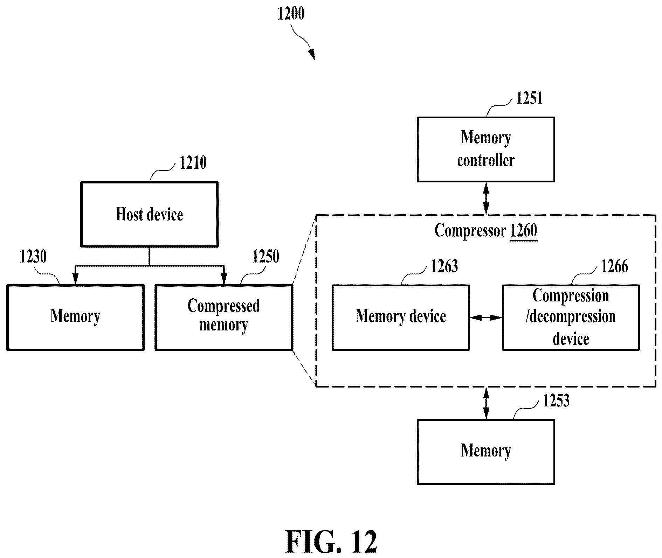

To efficiently use the compressed memory system, the memory compression 120 that reduces the size of the original data 110 and stores the original data 110 and the memory compaction 140 that stores the compressed data 130 in the physical memory device (or referred to as the memory device) 150 may be performed. In an example, the memory compaction 140 may be performed by the memory device (e.g., electronic device 1100 of FIG. 11 and/or compression/decompression device 1266 of FIG. 12).

In the typical compressed memory system of FIG. 1, original data 110 may be configured as data blocks in a specific size (e.g., a 4 KByte page). Each of the blocks of the original data 110 may be converted into blocks of the compressed data 130 having the same or smaller size than the original data through the memory compression 120. The blocks of the compressed data 130 may perform the memory compaction 140 to minimally use a storage space of the memory device 150. When the memory compaction 140 is not performed, the blocks of the compressed data 130 may occupy the same space as the blocks of the original data 110, and thereby, external memory fragmentation may occur and the valid memory capacity may not be improved. In this case, since the size and location information of the blocks of the compressed data 130 may be stored in a metadata table described below, the memory device 150 may be accessed by referring to the metadata table.

The memory device 150 may include a memory area to store data. The memory area may include a plurality of memory blocks. The plurality of memory blocks may be generated using a portion or an entirety of a memory chip of the memory device 150. Each memory block may correspond to a memory bank and the plurality of memory blocks may be grouped memory rank-wise and/or memory channel-wise. For example, a memory rank may be a set of simultaneously accessible memory chips (e.g., dynamic random-access memory (DRAM) chips) connected to the same chip select. A memory channel may be a set of memory chips accessible via the same channel (e.g., memory channel).

The memory area may be an area (e.g., a physical area) from which data can be read and/or to which data can be written in a memory chip of the physical memory device 150. The memory area may be disposed in a memory die or a core die of the memory device 150. The memory device 150 may cooperate with the host processor to process data in the memory area. For example, the memory device 150 may process data based on an instruction received from the host processor. The memory device 150 may control the memory area in response to the instruction from the host processor. The memory device 150 may be separate from the host processor.

FIG. 2 illustrates an example method of managing blocks of compressed data in a compressed memory system according to one or more embodiments. Referring to FIG. 2, in a non-limiting example, a method 200 may include a consecutive storage scheme 210 for blocks of compressed data and a fragmentation storage scheme 230 for blocks of compressed data.

That is, in an example, the method 200 for managing blocks of the compressed data may be divided into two, the consecutive storage scheme 210 and the fragmentation storage scheme 230.

In an example, the consecutive storage scheme 210 may map each of the blocks of the compressed data onto a consecutive physical address of the memory device. The consecutive storage scheme 210 may necessitate one piece of mapping information for each block in the metadata but external fragmentation may occur due to different sized blocks of the compressed data and then data migration may be performed.

In an example, the fragmentation storage scheme 230 may divide the blocks of the compressed data into a smaller size unit than the size of the blocks of the original data and may map the blocks onto a physical address of the memory device. The fragmentation storage scheme 230 may prevent the above described external fragmentation and may not require data migration, but the size of the metadata may increase because the metadata may have as many pieces of mapping information as the number of divided memory fragmentations.

Additional address conversion by the metadata in the compressed memory system may increase latency for memory access.

In an example, in order to access the data stored in the compressed memory (or the memory), the memory device may identify the size and location information of the compressed data by reading a metadata table stored in a separate area of the compressed memory device first. The memory device may read the compressed data by accessing the location where the actual compressed data is stored based on the information of the metadata and may decompress the compression of the read data (i.e., decompress the compressed data that is read). In this case, latency may occur because the memory device needs to wait until a request for reading the metadata table is completed before sending an access request to the actual memory address in which the compressed data is stored.

In addition, when managing the compressed memory based on the consecutive storage scheme 210, data migration may be performed to resolve external fragmentation or to respond to a compression rate change. During the data migration process, computational resources and memory bandwidth may be consumed and the access latency may increase when accessing the data in the migration process.

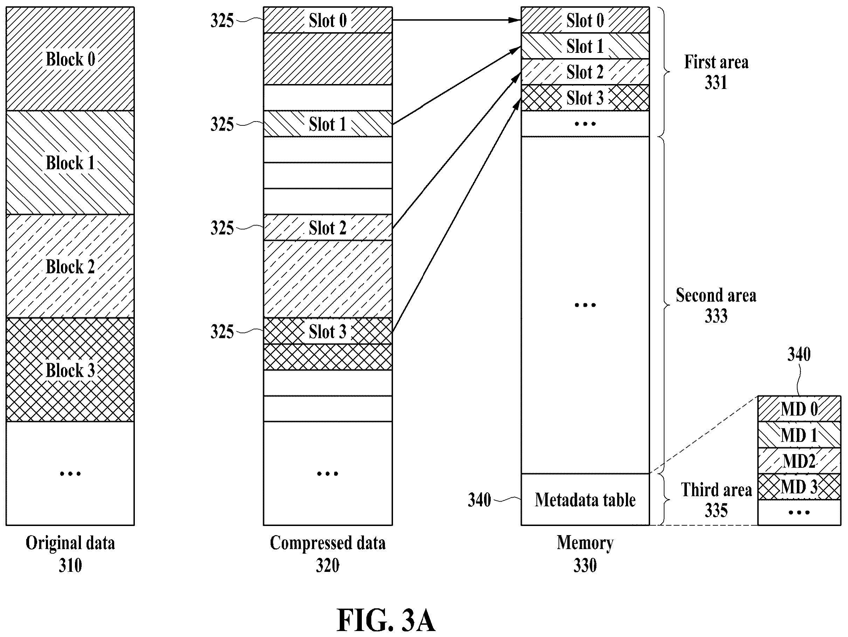

FIG. 3A illustrates an example method of managing a compressed memory by a memory device according to one or more embodiments. Referring to FIG. 3A, in a non-limiting example, a process in which a memory device (e.g., electronic device 1100) generates compressed data 320 by compressing original data 310 and stores the compressed data 320 in a memory 330 by memory compaction is illustrated.

As described above, the original data 310 may be configured as specific-sized data blocks (e.g., blocks 0, 1, 2, 3, ...). The specific size may be, for example, a 4 KByte page, but the example is not limited thereto. In this case, the "page" may be a process fragment having a small, fixed size and may have, for example, the size of 4 KByte or 8 KByte, but the example is not limited thereto. The page may also be referred to as a "memory page" because the page may be used as a basic unit of memory management. Each operation of the process may be performed page-wise. The number of pages may be determined based on a page size and/or the number of representable bits supported by the processor. Page-wise data may be referred to as a "page".

Each of the blocks of the original data 310 may become blocks of the compressed data 320 having a smaller or the same size as the original data through memory compression.

In an example, the memory device may fragment and store a portion of a front part of each block of the compressed data 320. In this case, the unit that the memory device fragments the blocks of the compressed data 320 may be referred to as a "slot" and the size of one slot may be less than the size of the blocks of the original data 310.

The data corresponding to the front part (a front end portion) of a fragmented block, in other words, a slot (e.g., slots 0, 1, 2, and 3) positioned at the first (e.g., the first position) of each block of the compressed data 320 may be referred to as a "first slot 325" or "the first slot" and data of the first positioned slot ("the first slot") of each block may be referred to as the "data of the first slot". The size of the first slot 325 may be, for example, determined by user settings or may be experimentally determined. As the size of the first slot 325 increases, the performance may be better, but when the size of the first slot 325 is great, the compression rate may be limited. Therefore, a trade-off relationship may be established between the compression rate and the size of the first slot 325.

In this case, the memory device may store the data of the first slot of each block of the compressed data 320 in the memory 330. The memory 330 may be a compressed memory or a general memory of the compressed memory device, but the example is not limited thereto. The type of the memory 330 may be at least one of a compute eXpress Link (CXL) memory, a graphics processing unit (GPU) memory, a memory of an accelerator, a general memory, a compressed memory, and storage, but is not limited thereto. The type of the memory 330 may be determined by one of an operating system (OS), a runtime, and user settings of an electronic device including the memory device.

More specifically, among the compressed data 320, the memory device may store the data of the compressed first slot 325 corresponding to a front part of each block of the original data 310 in a first area 331 of the memory 330. Hereinafter, the "first area" 331 may refer to an area for storing the data of the first slot 325, which is the first slot data for each block in the memory 330. The memory device may store the data of the first slot 325 in the first area 331 of the memory 330 in the same order of the blocks of the original data 310 corresponding to the data of the first slot 325. In this case, the size of the first area 331 may be variable. The memory device may dynamically adjust the size of the first area 331 according to one or more of a compression rate of the memory device (i.e., a compression rate up to the maximum compression rate of the memory) and the size of the memory (or the compressed memory) 330. For example, when the compression rate is low, the memory device may increase the size of the first area 331 and when the compression rate is high, the memory device may decrease the size of the first area 331.

In this case, the data of the first slot 325 and the blocks of the original data 310 may be one-to-one mapped according to an order of addresses of the original data 310 (e.g., an order of the addresses of the respective memory addresses and/or data addresses from the original data 310). In this case, in each block of the compressed data 320, the data of remaining slots other than the data of the first slot 325 may be stored in the remaining data area of the memory 330 using the consecutive storage scheme or the fragmentation storage scheme described above.

As described below, the memory device may store the data (e.g., compressed data) of the first slot 325 in parallel in the first area 331 of the memory 330. For example, the storage of the compressed data in parallel may be done in a channel-wise or rank-wise order or manner.

In addition, among the compressed data 320, the memory device may store the data of the remaining slot other than the data of the first slot 325 in a second area 333 of the memory 330. In this case, the size of the first slot 325 may not need to be the same as the size of the remaining slot and the data of the remaining slot may be distinguished as an individual slot form or may be one data form that is not distinguished as an individual slot form. Hereinafter, the "second area" 333 may refer to an area to store the data of the remaining slot for each block.

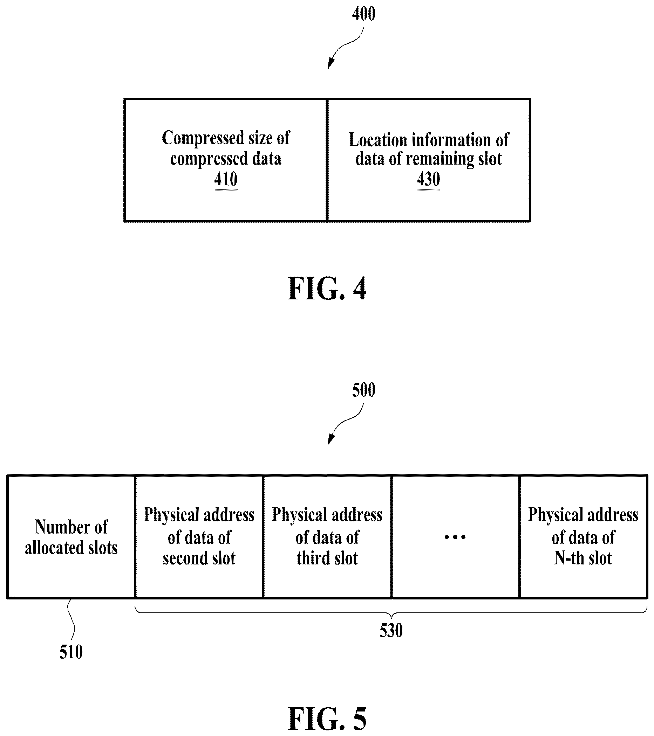

In an example, the memory device may store metadata corresponding to the data of the remaining slot in a metadata table 340 of a third area 335 of the memory 330. The metadata table 340 may store metadata (e.g., metadata MD 0, metadata MD1, metadata MD2, corresponding metadata MD3, ...) corresponding to each of the remaining slots other than the first positioned slot (e.g., "the first slot 325") (e.g., slot 0, slot 1, slot 2, and slot 3) of the compressed data 320. The configuration of the metadata and the configuration of the metadata table 340 are further described with reference to FIGS. 4 and 5 below.

As described above, in an example, the latency for accessing the data (e.g., the compressed data 320) stored in the memory 330 may be improved by reducing the read time of the metadata by allowing data access before reading the metadata by fragmenting a portion of the front part of the compressed data 320 and storing the portion in a separate area (e.g., the memory 330) of the memory device in the same order as the block order of the original data 310.

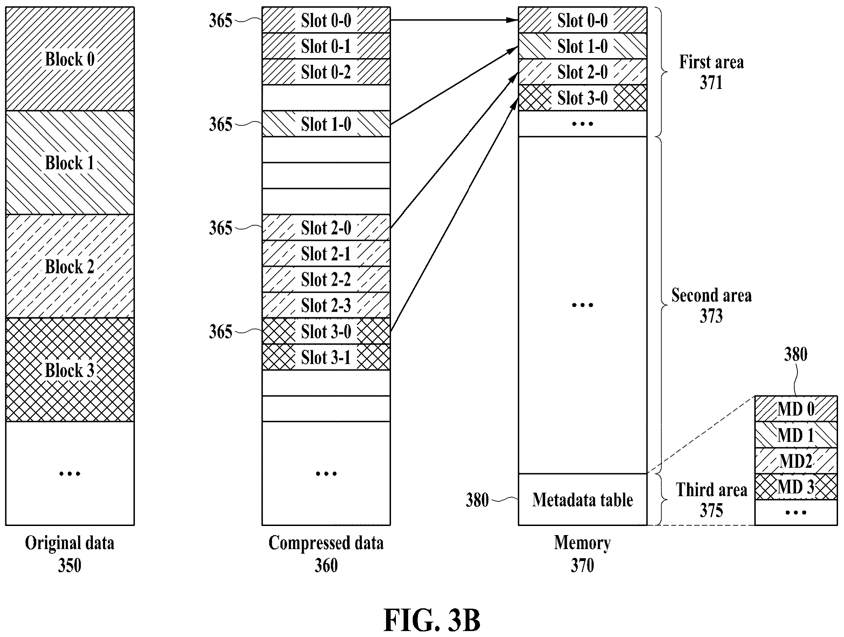

FIG. 3B illustrates an example method of managing a compressed memory by a memory device according to one or more embodiments. Referring to FIG. 3B, in a non-limiting example, a process in which a memory device (e.g., electronic device 1100) generates compressed data 360 by compressing original data 350 configured as 4 KByte pages (e.g., page 0, page 1, page 2, page 3, ...) and stores the compressed data 360 in a memory 370 is illustrated.

The original data 350 may be configured as 4 KByte pages (e.g., page 0, page 1, page 2, page 3, ...). The page may be used as a basic unit of memory management. Each operation of the process may be performed page-wise. The number of pages may be determined based on page size and the number of representable bits supported by the processor.

Each of the pages of the original data 350 may become pages of the compressed data 360 having a smaller or the same size as the original data through memory compression.

In an example, the memory device may fragment and store a portion of a front part of each page of the compressed data 360. In this case, the unit that the memory device fragments the pages of the compressed data 360 may be referred to as a "slot" and the size of one slot may be less than the size of the pages of the original data 350.

The data corresponding to a front part of the fragmented pages, in other words, the data of a slot (e.g., slot 0-0, slot 1-0, slot 2-0, and slot 3-0) positioned at the first (e.g., the first position) of each page of the compressed data 360 may be referred to as "data of a first slot 365". The size of the first slot 365 may be, 1 Kbyte.

The memory device may store the data of the first slot 365 of each page of the compressed data 360 in the memory 370. The memory 370 may be a compressed memory or a general memory of the compressed memory device, but the example is not limited thereto.

More specifically, among the compressed data 360, the memory device may store the data of the compressed first slot 365 corresponding to a front part of each page of the original data 350 in a first area 371 of the memory 370.

In an example, the memory device may store the data of the first slot 365 in the first area 371 of the memory 370 in the same order as the pages of the original data 350 corresponding to the data of the first slot 365. In this case, the data of the first slot 365 and the pages of the original data 350 may be one-to-one mapped according to the order of the addresses. In this case, in each page of the compressed data 360, the data of remaining slots other than the data of the first slot 365 may be managed using the fragmentation storage scheme described above and the unit of fragmentation may be 1 Kbyte, which is the same unit as the first slot 365. However, the page (or data block) size and the slot size may vary.

In addition, among the compressed data 360, the memory device may store the data of the remaining slots (e.g., slot 0-1, slot 0-2, slot 2-1, slot 2-2, slot 2-3, slot 3-1), other than the data of the first slot 365, in a second area 373 of the memory 370. The memory device may store metadata corresponding to the data of the remaining slot in a metadata table 380 of a third area 375 of the memory 370. In this case, the size of the metadata table 380 may correspond to a smaller unit than the slot.

When a host device accesses the data stored in the memory 370 (e.g., the compressed memory), the memory device may operate as follows.

In an example, when the host device sends a request to access the compressed data 360 stored in the memory 370, based on an address of the memory 370 that the host device desires to access, the memory device may calculate a device physical address of the metadata and the data of the first slot (e.g., "the data of the first slot 365") corresponding to a page to which the address belongs.

More specifically, the memory device may read and decompress the data of the first slot 365 from the memory 370. The memory device may perform reading and decompressing of the data of the first slot 365 simultaneously in parallel with reading the metadata corresponding to a page to which the address belongs. The memory device may read the remaining slot data by identifying a device physical address of the remaining slot data by reading the metadata. The memory device may decompress the compression of the remaining slot data by a compression and decompression device and may return the entirety of decompressed page data to the host device.

In this case, the page of the physical address space of the host device may be mapped with the first slot of an index that is the same as the index of the corresponding page and an entry of the metadata stored in the metadata table 380. Accordingly, the memory device may compute the device physical address of the first slot 365 corresponding to the page and the device physical address of the metadata from a physical address of the host device corresponding to the page. In this case, the host device may be a main management entity of a computer system (e.g., an electronic device) and may be implemented as a host processor or a server. The host processor may include, for example, a host CPU. For example, the host processor may include a processor core and a memory controller, but the example is not limited thereto. The host processor may direct all operations and may delegate an operation requiring acceleration (e.g., a processing-near-memory (PNM) operation) to the memory device.

More specifically, an index PAGE_ID of the page may be a value (e.g., PAGE_ID = PAGE_ADDR/4096) obtained by dividing a physical address PAGE_ADDR of the page by 4KBytes, which may be a basic unit of the page for this example. A device physical address of the first slot (e.g., the first slot 365) corresponding to the page may be a value (e.g., FIRST_SLOT_ADDR = PAGE_ID * SLOT_SIZE + FIRST_SLOT_REGION_BASE_ADDR) obtained by multiplying an index of each page by a slot size and adding a base address of the first slot area thereto.

In addition, a device physical address of the metadata corresponding to the page may be a value (e.g., METADATA_ADDR = PAGE_ID * METADATA_SIZE + METADATA_REGION_BASE_ADDR) obtained by multiplying a page index by a metadata size and adding a base address of the metadata area thereto. In this case, the base address of the first slot area and the base address of the metadata area may be predetermined values. The memory device may immediately obtain the base address of the first slot area and/or the base address of the metadata area by storing the base addresses in a register.

In this case, the location information of the remaining slots other than the first slot 365 corresponding to the page that the host device desires to access may be stored in the entry of the metadata table 380 corresponding to the page. The memory device may obtain the device physical address of the remaining slots by reading the entry of the metadata table 380 and may decompress the compression of the data of the remaining slots by reading the data of the remaining slots from the corresponding address.

Typically, the compressed memory system may use the metadata containing the compression size and location information of the compressed data 360 to efficiently store and/or access the compressed data 360 in the compressed memory device. However, because there is a waiting time that occurs until the reading of the metadata is completed before accessing the compressed data 360 stored in the compressed memory device, the latency for the typical data access may increase.

In an example, the memory device may prevent waiting until reading the metadata is completed and may reduce the latency for data access by computing the address of the first slot 365 corresponding to each page without additional address conversion through the metadata.

In addition, the memory device may store the data of the compressed first slot 365 in the first area 371 of the memory 370 in a channel-wise or rank-wise manner in parallel. By considering the memory interleaving characteristic, the memory device may simultaneously store, in a channel or a rank, a location (e.g., the first area 371) of the memory 370 in which the data of the first slot 365 is stored or a location (e.g., the third area 375) of the memory 370 in which the metadata is stored to load the locations in multiple slots in parallel. This may allow the memory device to perform decompression with low latency since the memory device is able to process requests for multiple pieces of data at once in parallel.

FIG. 4 illustrates an example configuration of metadata for each data block according to one or more embodiments. Referring to FIG. 4, in a non-limiting example, a configuration of an entry 400 of metadata stored in a metadata table (e.g., the metadata table 340 of FIG. 3A and/or the metadata table 380 of FIG. 3B) is illustrated.

In an example, the metadata table may be stored in a separate storage area of the compressed memory device. The metadata table may include a compressed size 410 of compressed data (a corresponding data block) and location information 430 of data of the remaining slots, in other words, the entry 400 of the metadata that stores a device physical address to which the data of the remaining slots is allocated. The entry 400 of the metadata table may be one-to-one mapped with blocks of the original data in an accordance with an order of the addresses (e.g., the order of addresses of the original data). The entry 400 of the metadata may be included in, for example, the metadata MD0, MD1, ..., of the metadata table 380 of FIG. 3B.

For example, when a page (or a block) to be accessed is the second page, the location information of the remaining slots other than the first slot corresponding to the second page may be stored in the entry 400 of the metadata table corresponding to the second page. The memory device may obtain the device physical address of the remaining slots by reading the entry 400 of the metadata table. The memory device may decompress the compression of the data of the remaining slots by reading the data (compressed data) of the remaining slots from the device physical address of the remaining slots. In this case, the location information 430 of the data of the remaining slots may include metadata 500 described with reference to FIG. 5 below.

FIG. 5 illustrates an example configuration of metadata according to one or more embodiments. Referring to FIG. 5, in a non-limiting example, a configuration of metadata 500 is illustrated.

The metadata 500 may include the number of slots 510 allocated to data of remaining slots (e.g., the second slot, the third slot, ..., the N-th slot) other than the first slot and physical addresses 530 of the data of the remaining slots respectively corresponding to blocks of the original data. For example, the physical address of the data of the second slot may be a value of the physical address of the data of the remaining slot (slots 0-1, 0-2) other than the first slot (slot 0-0) in a page 0 (or block 0).

FIG. 6 illustrates an example method of a memory device according to one or more embodiments. In the following embodiments, operations may be performed sequentially, but are not necessarily performed sequentially. For example, the order of the operations may change and at least two of the operations may be performed in parallel.

Referring to FIG. 6, in a non-limiting example, in method 600, the memory device (e.g., electronic device 1100 of FIG. 11) may store the data of the first slot (or referred to as the first slot data), the data of the remaining slots (or referred to as the remaining slot data), and metadata in corresponding area of the memory through operations 610 to 630.

In an example, in operation 610, the memory device may store the data of the first slot corresponding to a front part of the compressed data from the original data in the first area of the memory. The memory device may store the data of the first slot in the first area of the memory in the same order as the order of blocks of the original data corresponding to the data of the first slot for each block of the original data. The memory device may store the data of the first slot in the first area of the memory channel-wise or rank-wise in parallel.

In an example, in operation 620, the memory device may store, in the second area of the memory, the data of the remaining slots other than the data of the first slot stored in operation 610 among the compressed data.

In an example, in operation 630, the memory device may store, in the metadata table of the third area of the memory, the metadata corresponding to the data of the remaining slots stored in operation 620. The metadata table may include a compressed size of the compressed data and an entry of the metadata that stores the location information of the data of the remaining slots. The entry of the metadata may be one-to-one mapped with the blocks of the original data in the order of the addresses.

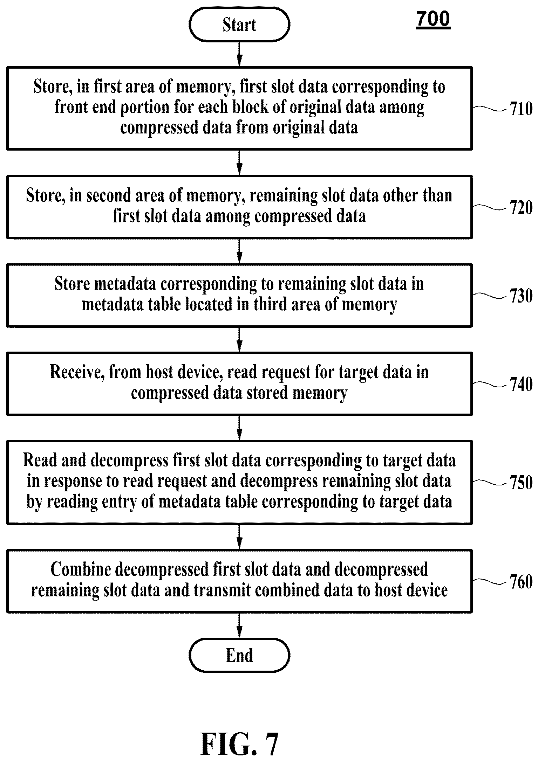

FIG. 7 illustrates an example method of a memory device according to one or more embodiments. Referring to FIG. 7, in a non-limiting example, in method 700, the memory device (e.g., electronic device 1100 of FIG. 11) may decompress the compressed data and may transmit the decompressed data to the host device through operations 710 to 760.

In an example, in operation 710, among the compressed data from the original data, the memory device may store, in the first area of the memory, the data of the first slot corresponding to the front part for each block of the original data. The memory device may store the data of the first slot in the first area of the memory device in the same order as the order of the blocks of the original data corresponding to the data of the first slot.

In an example, in operation 720, the memory device may store, in the second area of the memory, the data of the remaining slots other than the data of the first slot stored in operation 710 among the compressed data.

In an example, in operation 730, the memory device may store, in the metadata table of the third area of the memory, the metadata corresponding to the data of the remaining slots stored in operation 720.

In an example, in operation 740, the memory device may receive, from the host device, a read request for target data in the compressed data stored in the memory. The memory device may receive a read request including an index of the target data. In this case, the read request may be referred to as an "access request".

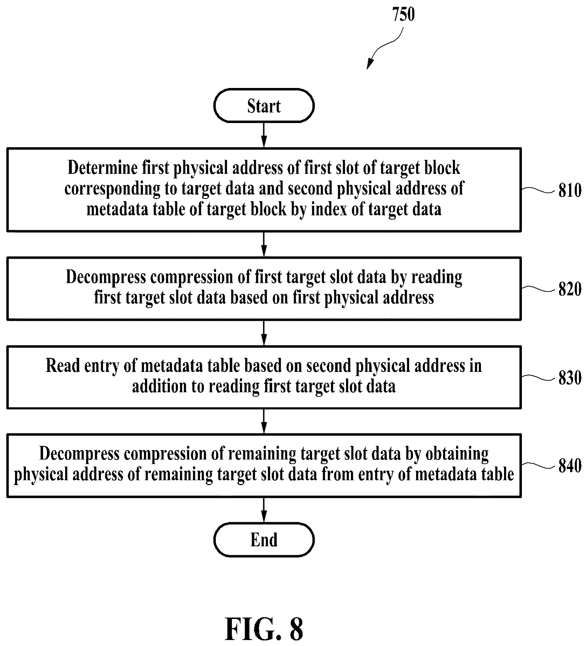

In an example, in operation 750, the memory device may read and decompress first slot data ("first target slot data") corresponding to the target data in response to the read request received in operation 740 and may read the entry of the metadata corresponding to the target data to decompress the remaining slot data ("the remaining target slot data"). A decompression process by the memory device is further described in greater detail below with reference to FIG. 8.

In an example, in operation 760, the memory device may combine the decompressed first slot data with the decompressed remaining target slot data in operation 750 and may transmit the combined data to the host device. The memory device may transmit block data, which is a combination of the decompressed first slot data and the decompressed remaining target slot data, to the host device.

FIG. 8 illustrates an example method of decompressing compression according to one or more embodiments. Referring to FIG. 8, in a non-limiting example, the memory device (e.g., electronic device 1100 of FIG. 11) may decompress compressed data through operations 810 to 840 with reference to operation 750 of FIG. 7 above.

In an example, in operation 810, the memory device may determine a first physical address of a first slot of a target block corresponding to target data and a second physical address of a metadata table of the target block, by an index of the target data included in the read request of operation 740 of FIG. 7. That is, the index of the target data in the read request provides the necessary information (e.g., address information) to read the first target slot data and the remaining target slot data. The memory device may determine the first physical address by a value obtained by multiplying the index of the target block by a slot size and adding a base address of the first area of the memory (e.g., the area that stores the first target slot data) thereto. The memory device may determine the second physical address by a value obtained by multiplying the index of the target block by a metadata size and adding a base address of the metadata thereto.

In an example, in operation 820, the memory device may decompress the first target slot data by reading the first target slot data based on the first physical address determined in operation 810.

In an example, in operation 830, the memory device may read the entry of the metadata table based on the second physical address in addition to (i.e., simultaneously with) reading the first target slot data in operation 820.

In an example, in operation 840, the memory device may decompress the remaining target slot data by obtaining the physical address of the remaining target slot data from the entry of the metadata table read in operation 830.

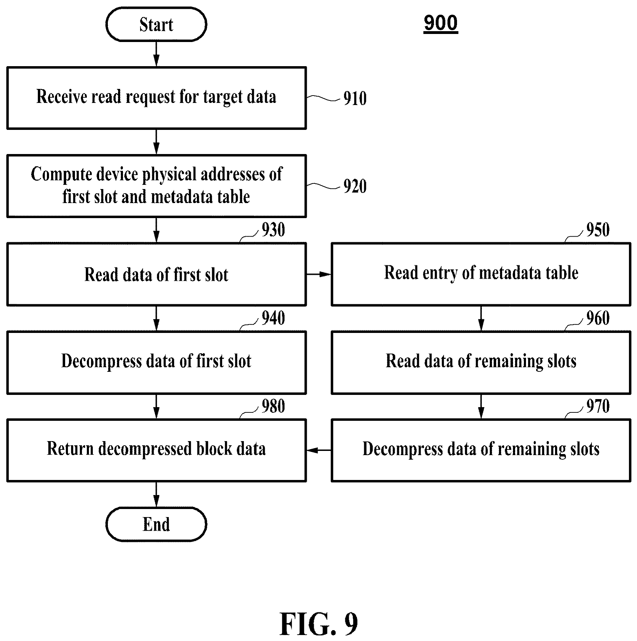

FIG. 9 illustrates an example method of processing a data read request in a compressed memory system according to one or more embodiments. Referring to FIG. 9, in a non-limiting example, in method 900, the memory device (e.g., electronic device 1100 of FIG. 11) may decompress and return compressed data through operations 910 to 980 in response to a data read request by the host device.

In an example, in operation 910, the memory device may receive, from the host device, a read request for target data among the compressed data stored in the compressed memory.

In an example, in operation 920, the memory device may compute device physical addresses of a first slot corresponding to the target data and an entry of the metadata table, in response to the read request in operation 910. In this case, the first slot may correspond to a data block of the target data. Since each data block is one-to-one mapped with the block (or the page) of the first slot and the entry of the metadata table in the order of the addresses, the memory device may identify the device physical addresses of the corresponding first slot data and the entry of the metadata table through the index of the data block to be accessed.

In an example, in operation 930, according to the device physical addresses computed in operation 920, the memory device may decompress the compression of the data of the first slot in operation 940 by reading the data of the first slot. In addition, the memory device may read the data of the remaining slots in operation 960 by reading the entry of the metadata table in operation 950. On the other hand, in a typical compressed memory system there may be a need to wait until the read request for the metadata is completed to identify the device physical address in which the compressed data is stored. Meanwhile, in examples of the compressed memory technique (e.g., method 600, 700, and 900 of FIGS. 6-9), the latency for data access may be reduced by decompressing the compression by reading the data of the first slot before reading the metadata while simultaneously reading the data of the remaining slots and the metadata in parallel. In this case, the remaining slots may correspond to the remaining slots other than the first slot in the target data.

In an example, in operation 960, the memory device may identify the device physical address of the remaining data (the data of the remaining slots) through the entry of the metadata table read in operation 950 and may read the remaining data.

In an example, in operation 970, the memory device may decompress the compression of the data of the remaining slots read in operation 960.

In an example, in operation 980, the memory device may return decompressed block data to the host device by combining the decompressed data of the first slot in operation 940 with the decompressed data of the remaining slots in operation 970. In this case, the combined data may correspond to the entire decompressed data corresponding to the target data.

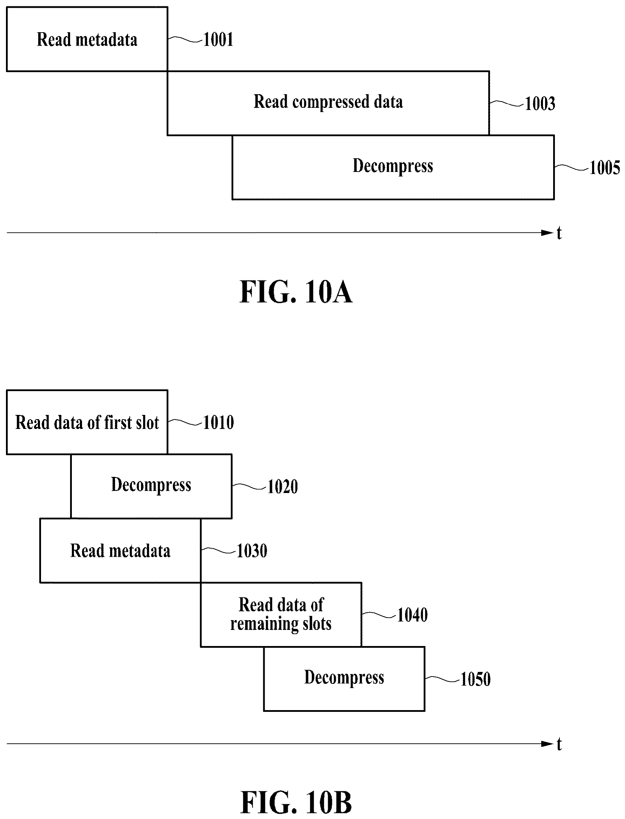

FIGS. 10A and 10B illustrate example illustrations of data access latency through priority read on a first slot according to one or more embodiments. Referring to FIG. 10A, in a non-limiting example, a graph showing latency that occurs when accessing data in a typical (i.e., conventional) compressed memory management method is illustrated.

In the typical compressed memory management method, a waiting time may occur until a task in response to a metadata read request is completed to identify a device physical address in which compressed data is stored. In other words, after metadata reading (1001) is completed, the compressed data may be read (1003) in an address in which the actual data is stored through a location address stored in the metadata and decompression (1005) may be performed on the read compressed data. Accordingly, until the metadata reading (1001) is completed, access and reading the compressed data may not be allowed.

Referring to FIG. 10B, in a non-limiting example, a graph showing latency that occurs when accessing data in a compressed memory management method (e.g., method 600 of FIG. 6) is illustrated.

In an example, the first slot data may be immediately read without referring mapping information through the metadata by fixing a location to which the first slot is allocated for each page (or block) of the memory. In other words, while the memory device reads (1010) the data of the first slot and decompresses (1020) the compression of the data of the first slot, the memory device may perform, in parallel, metadata reading (1030), remaining slot data reading (1040) other than the data of the first slot, and/or decompression (1050). Through this, the memory device may reduce the latency that occurs when accessing data occurring in the compressed memory.

FIG. 11 illustrates an example electronic device according to one or more embodiments. Referring to FIG. 11, in a non-limiting example, an electronic device 1100 for memory compression may include one or more processors 1110 and a memory 1130. In a non-limiting example, the one or more processors 1110 and the memory 1130 in the electronic device 1100 may communicate through a bus 1105.

The one or more processors 1110 may be configured to execute programs or applications to configure the processor 1110 to control the electronic device 1100 to perform one or more or all operations and/or methods involving the management of compressed memory as described above (e.g., method 600, 700, and 900 of FIGS. 6-9), and may include any one or a combination of two or more of, for example, a central processing unit (CPU), a graphic processing unit (GPU), a neural processing unit (NPU) and tensor processing units (TPUs), but is not limited to the above-described examples.

The memory 1130 may store computer-readable instructions executable by the one or more processors 1110. The one or more processors 1110 may be configured to execute computer-readable instructions, such as those stored in the memory 1130, and through execution of the computer-readable instructions, the one or more processors 1110 are configured to perform one or more, or any combination, of the operations and/or methods described herein. The memory 1130 may be a volatile or nonvolatile memory. When at least a portion of the instructions stored in the memory 1130 is executed by the one or more processors 1110, the at least a portion of the instructions may cause the one or more processors 1110 to store, in the first area of the memory, the data of the first slot corresponding to the front part of the compressed data from the original data, store, in the second area of the memory, the data of the remaining slot other than the first slot in the compressed data, and store the metadata corresponding to the data of the remaining slot in the metadata table in the third area of the memory.

FIG. 12 illustrates an example compressed memory system according to one or more embodiments. Referring to FIG. 12, in a non-limiting example, a compressed memory system 1200 may include a host device 1210, a memory 1230, and a compressed memory 1250. The memory 1230 may be referred to as a "normal memory" because the memory 1230 is distinguished from the compressed memory 1250.

In an example, the host device 1210 may be a main management entity of a computer system. The host device 1210 may be implemented as a personal computer or a server. The host device 1210 may transmit a required instruction to the memory 1230 and/or the compressed memory 1250 while executing an operating system and an application program. The host device 1210 may execute a plurality of application programs. The host device 1210 may manage data in the memory 1230 and/or the compressed memory 1250 to execute the plurality of application programs. The data of the plurality of application programs may be stored in the memory 1230 or the compressed memory 1250 page-wise (e.g., 4 KByte-wise or 8 KByte-wise).

The memory 1230 may be referred to as a "memory module" and may store instructions (or programs) executable by the host device 1210. For example, the instructions include instructions for performing an operation of the host device 1210 and/or an operation of each component of the host device 1210.

The memory 1230 may be divided into a normal memory area and a compressed memory area. The memory 1230 may store pages corresponding to the application programs. The page may correspond to an operation unit of a process.

The memory 1230 and/or the compressed memory 1250 may be implemented as a volatile memory device or a non-volatile memory device. The volatile memory device may be implemented as dynamic random-access memory (DRAM), static random-access memory (SRAM), thyristor RAM (T-RAM), zero capacitor RAM (Z-RAM), or twin transistor RAM (TTRAM). The non-volatile memory device may be implemented as electrically erasable programmable read-only memory (EEPROM), flash memory, magnetic RAM (MRAM), spin-transfer torque (STT)-MRAM, conductive bridging RAM (CBRAM), ferroelectric RAM (FeRAM), phase-change RAM (PRAM), resistive RAM (RRAM), nanotube RRAM, polymer RAM (PoRAM), nano floating gate memory (NFGM), holographic memory, a molecular electronic memory device, or insulator resistance change memory.

The memory 1230 and the compressed memory 1250 may be a system memory of the compressed memory system 1200 and may receive respective memory address ranges. Whether to store a page in the memory 1230 or the compressed memory 1250 may be determined by the operating system, runtime, and/or user settings of the host device 1210.

The memory 1230 and the compressed memory 1250 may be configured to store individual data pieces or may be configured as a structure in which a storage space for normal data and a storage space for compressed data are separated in the memory 1230. When the storage space for normal data is separated from the storage space for the compressed data in the memory 1230, the compressed memory 1250 may be included as a part of the memory 1230.

The compressed memory 1250 may include a memory controller 1251, a compressor 1260, and a memory 1253, but the example is not limited thereto.

The memory controller 1251 may perform memory management related to execution of an operating system and an application program. In response to the reception, from the host device 1210, of a read request for target data of the compressed data stored in the memory 1253, the memory controller 1251 may generate a control signal for decompressing the target data.

The memory 1253 may include at least one of the normal memory area and the compressed memory area.

The compressor 1260 may store the compressed data obtained by compressing the original data in the memory 1253 and may decompress the compression of the target data according to the control signal generated by the memory controller 1251.

For example, the compressor 1260 may be disposed adjacent to the memory 1253 like a near memory processing unit (NMP) to perform real-time compression. The compressor 1260 may be included in, for example, at least one of a compute express link (CXL) controller and a large language model (LLM) accelerator, but examples are not limited thereto.

The compressor 1260 may manage a memory area to be allocated to an application program that requires a large volume of memory through the configuration and operations described above. The management method may be applied to various computer systems, such as mobile device and a server.

In addition, the compressor 1260 may be executed by a dedicated acceleration unit (e.g., a processing near memory (PNM)) near the memory. The compressor 1260 may be referred to as a "compression accelerator" or an "accelerator" since the compressor 1260 accelerates compression and/or decompression.

The compressor 1260 may include a memory device 1263 and a compression and decompression device (or referred to as a compression/decompression device) 1266. As shown in FIG. 12, in an example, the memory device 1263 may be disposed between the memory controller 1251 and the memory 1253 of the compressed memory 1250. The memory device 1263 may correspond to the memory device (e.g., the electronic device 1100 of FIG. 11) described above but the example is not limited thereto.

In an example, the memory device 1263 may combine the decompressed data of the first slot with the decompressed data of the remaining slots that are decompressed by the compression and decompression device 1266 and may transmit the combined data to the host device 1210. The memory device 1263 may store, in the first area of the memory 1253, the decompressed data of the first slot corresponding to a front part for each block of the original data among the compressed data in the compression and decompression device 1266. The memory device 1263 may store, in the second area of the memory 1253, the data of the remaining slots other than the data of the first slot among the compressed data in the compression and decompression device 1266. In addition, the memory device 1263 may store the metadata corresponding to the data of the remaining slots in the third area of the memory 1253.

In an example, the compression and decompression device 1266 may decompress the data of the first slot by reading the data of the first slot corresponding to the target data and may decompress the data of the remaining slots by reading the entry of the metadata table. One or a plurality of compression and decompression devices 1266 may be provided.

The memory device 1263 may determine a first physical address of the first slot of the target block corresponding to the target data and a second physical address of the metadata table of the target block by an index of the target data. The memory device 1263 may decompress the compression of the first slot data by at least one of the compression and decompression devices 1266 by reading the first slot data corresponding to the target data based on the first physical address. In addition to reading the first slot data, the memory device 1263 may read the entry of the metadata table corresponding to the target data based on the second physical address. The memory device 1263 may decompress the compression of the remaining slot data by at least one of the compression and decompression devices 1266 by obtaining a physical address of the remaining slot data from the entry of the metadata table.

The compressed memory management method described above may be applied to a software-define far-memory based on memory compression, memory compression mounted on an accelerator, and/or storage compression. In addition, in an example, the memory device 1263 may be provided at different positions, such as between a cache and a memory or in a memory bus, other than between the memory 1253 and the memory controller 1251 of the compressed memory 1250.

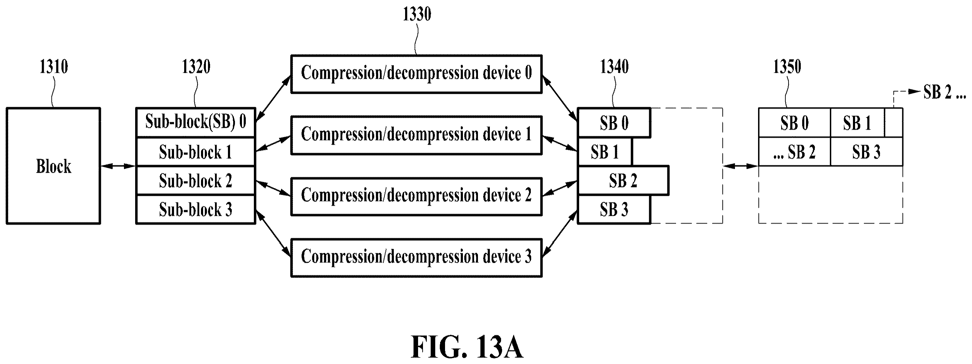

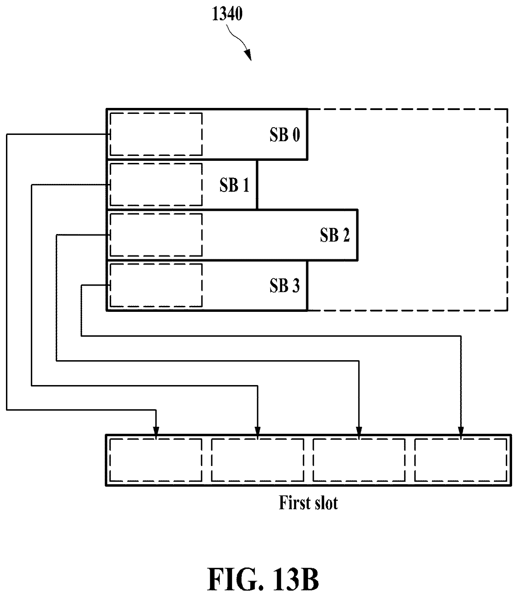

FIG. 13A illustrates an example compressed memory system with a plurality of compression and decompression devices according to one or more embodiments. FIG. 13B illustrates an example data configuration of a first slot in a compressed memory system with as a plurality of compression and decompression devices according to one or more embodiments .

Referring to FIGS. 13A and 13B, in a non-limiting example, a memory device, or a compressed memory system including the memory device, may divide a block 1310 of original data into a plurality of sub-blocks 1320. The compressed memory system may divide the block 1310 of the original data into a plurality of sub-blocks 1320 (e.g., a sub-block (SB) 0, an SB 1, an SB 2, and an SB 3), the number of sub-blocks 1320 may correspond to the number (e.g., 4) of compression/decompression devices 1330 (e.g., a compression/decompression device 0, a compression/decompression device 1, a compression/decompression device 2, and a compression/decompression device 3). There may be one or more blocks 1310 of the original data.

The compressed memory system may perform compression and/or decompression on each of the plurality of sub-blocks 1320 in the respective compression/decompression devices 1330 (e.g., the compression and decompression device 1266 of FIG. 12) corresponding to the plurality of sub-blocks 1320.

The compressed memory system may form a first slot (e.g., the "first slot") 1340 by aggregating a portion of a front portion of the plurality of compressed sub-blocks 1320 in the respective compression/decompression devices 1330.

The compressed memory system may form the first slot 1340 by the compressed data of the first sub-slot corresponding to a front part for each of the plurality of compressed sub-blocks 1320 in the respective compression/decompression devices 1330 and may store the first slot 1340 in a first area 1350 of the memory. In this case, the compressed memory system may store, in a metadata table, the metadata corresponding to data of remaining sub-slots other than the compressed data of the first sub-slot for each of the plurality of sub-blocks 1320.

In an example, when accessing the plurality of compressed sub-blocks 1320 in the respective compression/decompression devices 1330, the compressed memory system may have previously read the data of the first sub-slot ("the first sub-slot") of a corresponding data block. Since a portion of the front portion data of each sub-block is stored in the first sub-slot, the compressed memory system may decompress the compression by using the plurality of compression/decompression devices 1330 in parallel. The compressed memory system may identify an address of the data of the remaining sub-slots by reading the metadata while decompressing the data of the first slot. The compressed memory system may decompress the compression by reading the data of the remaining sub-slots from the identified address of the data of the remaining sub-slots. In this case, the metadata may include additional information to manage the data of the plurality of sub-slots. The metadata may correspond to the data of the remaining sub-slots and may include at least one of the number of slots allocated to each data piece of the remaining sub slots, a physical address of the data of the remaining sub-slot corresponding to the block 1310 of the original data, and the compression size of each data piece of the remaining sub-slots.

The memories, processors, electronic devices, electronic device 1100, one or more processors 1110, memory 1130, compressed memory system 1200, host device 1210, memory 1230, compressed memory 1250, memory controller 1251, memory 1253, compressor 1260, memory device 1263, compression and decompression devices 1266 described herein and disclosed herein described with respect to FIGS. 1-13B are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-13B that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks , and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is specified by the enclosed claims.

## Claims

1. A method of managing compressed data, the method comprising:
storing, in a first area of a memory, first data of a first slot corresponding to a front part among the compressed data from original data;
storing, in a second area of the memory, second data of a remaining slot, the remaining slot including data from the compressed data other than the first data; and
storing metadata corresponding to the second data in a metadata table in a third area of the memory.

2. The method of claim 1, wherein the storing the first data comprises:
storing the first data in the first area of the memory in a same order as an order of blocks of the original data corresponding to the first data for each of the blocks of the original data.

3. The method of claim 1 or 2, wherein the first data and the blocks of the original data are one-to-one mapped in an order of addresses of the original data.

4. The method of one of claims 1 to 3, wherein the storing the first data comprises:
storing the first data in the first area of the memory in parallel, and/or
wherein the storing the first data of the first slot is performed by one of a channel wise and rank-wise manner.

5. The method of one of claims 1 to 4, wherein the metadata table comprises a compressed size of the compressed data and an entry of the metadata storing location information of the second data, and
wherein the entry of the metadata is one-to-one mapped with blocks of the original data in an order of addresses of the original data.

6. The method of one of claims 1 to 5, wherein the metadata comprises a number of slots allocated to the second data and a physical address of the second data corresponding to each block of the original data.

7. The method of one of claims 1 to 6, wherein a first size of the first area is dynamically adjusted according to one or more of a compression rate of the memory and a size of the memory.

8. The method of one of claims 1 to 7, wherein the storing the first data comprises:
dividing blocks of the original data into a plurality of sub-blocks; and
storing, in the first area of the memory, first sub-slot data of a first sub-slot corresponding to a front part for each of the plurality of sub-blocks.

9. The method of claim 8, wherein the storing of the metadata corresponding to the second data comprises:
storing, in the metadata table, metadata corresponding to remaining sub-slot data of a remaining sub-slot other than the first sub-slot data for each of the plurality of sub-blocks, and/or
wherein the metadata comprises one or more of a number of slots allocated to each data piece of the remaining sub-slot, a physical address of the data of the remaining sub-slot corresponding to each of the blocks of the original data, and a compression size of the data of the remaining sub-slot.

10. A non-transitory computer-readable storage medium storing instructions that, when executed by a processor, cause the processor to perform the method of managing compressed data, the method comprising:
receiving, from a host device, a read request for target data from among the compressed data stored in a memory;
computing device physical addresses of a first slot corresponding to the target data and an entry of a metadata table responsive to the read request;
according to the device physical addresses, decompressing first data of the first slot by reading the first data of the first slot and decompressing remaining data of a remaining slot other than the first slot by reading the entry of the metadata table; and
transmitting block data obtained by combining the decompressed first data and the decompressed remaining data to the host device.

11. The computer-readable storage medium of claim 10, wherein the read request comprises an index of the target data, and/or
wherein the decompressing comprises:
determining a first physical address of a first slot of a target block corresponding to the target data and a second physical address of a metadata table of the target block, by an index of the target data;
decompressing compression of the first data of the first slot by reading the first data of the first slot based on the first physical address;
reading an entry of the metadata table based on the second physical address in addition to reading the first data; and
decompressing the remaining data by obtaining a physical address of respective data of the remaining slot from the entry of the metadata table.

12. The computer-readable storage medium of claim 11, wherein the determining of the first physical address and the second physical address comprises:
determining the first physical address by a first multiplying of the index of the target block by a slot size and adding a base address of a first area of the memory to a first result of the first multiplying; and
determining the second physical address by a second multiplying of the index of the target block by a size of the metadata and adding a base address of a third area of the memory to a second result of the second multiplying.

13. A compressed memory system, the system comprising:
a memory comprising one or more of a normal memory area and a compressed memory area;
a memory controller configured to generate a control signal for decompressing target data in response to receiving, from a host device, a read request for the target data among compressed data stored in the memory; and
a compressor configured to store compressed data of original data in the memory and decompress a compression of the target data in response to the control signal,
wherein the compressor comprises:
a compression and decompression device configured to decompress first data of a first slot by reading the first data of the first slot corresponding to the target data and decompress remaining data of a remaining slot by reading an entry of a metadata table; and
a memory device configured to:
combine the decompressed first data with the decompressed remaining data; and
transmit the combined data to the host device.

14. The compressed memory system of claim 13, wherein the memory device is further configured to:
store, in a first area of the memory, first data of the first slot corresponding to a front part for each of blocks of the original data in the compressed data;
store, in a second area of the memory, remaining data of a remaining slot other than the first data of the first slot among the compressed data; and
store metadata corresponding to the remaining data in a metadata table in a third area of the memory.

15. The compressed memory system of claim 13 or 14, wherein the memory device is further configured to:
determine a first physical address of a first slot of a target block corresponding to the target data and a second physical address of a metadata table of the target block, by an index of the target data;
decompress a compression of the first data of the first slot by the compression and decompression device by reading the first data of the first slot corresponding to the target data based on the first physical address;
read an entry of a metadata table corresponding to the target data based on the second physical address in addition to reading the first data of the first slot; and
decompress a compression of the remaining data of the remaining slot by the compression and decompression device by obtaining a physical address of the remaining data of the remaining slot from the entry of the metadata table.
